# FASCICULE DE BREVET EUROPEEN

(11) **EP 3 822 176 B1**
(45) Date de publication et mention de la délivrance du brevet: **20.03.2024**
(21) Numéro de dépôt: 20206802.9
(22) Date de dépôt: 10.11.2020
(51) Int. Cl.: B64G 1/40, B64G 1/66, F03H 1/00

(54) **SYSTÈME D'ÉJECTION DE PARTICULES DANS L'ESPACE**
SYSTEM ZUM TEILCHENAUSWURF IN DEN WELTRAUM
SYSTEM FOR EJECTING PARTICLES IN SPACE

(30) Priorité: 12.11.2019 FR 1912480
(43) Date de publication de la demande: 19.05.2021
(73) Titulaire: CT Ingenierie, 31770 Colomiers (FR)
(72) Inventeur: DUPONT, Cédric, 78280 GUYANCOURT (FR); LEQUETTE, Laurent, 78280 GUYANCOURT (FR); MISSONNIER, Sophie, 78280 GUYANCOURT (FR); ROMMELAERE, Simon, 78280 GUYANCOURT (FR); BONNAL, Christophe, 75612 PARIS (FR)
(74) Mandataire: Ex Materia

(56) Documents cités:
- US-A- 3 380 249
- US-A- 4 821 508
- US-A- 5 697 212
- US-A1- 2012 241 562
- US-B1- 9 021 782
- US-B2- 9 657 725
- US-B2- 10 415 552

## Description

La présente invention concerne le domaine de la pollution spatiale définie par la présence dans l'espace de débris spatiaux en orbite autour de la Terre. Plus particulièrement, la présente invention concerne le domaine de la déviation de tels débris spatiaux.

Les débris spatiaux en orbite autour de la Terre sont définis comme des objets en orbite qui présentent une dimension d'au moins 100 µm. De tels débris spatiaux engendrent au moins deux types de risques : un premier risque de collision avec les populations au sol lors de rentrées atmosphériques de ces débris spatiaux et un deuxième risque de collision avec d'autres objets en orbite autour de la Terre, tels que des satellites par exemple. Les plus gros de ces débris spatiaux sont répertoriés et leurs trajectoires sont analysées pour anticiper au mieux ces éventuelles collisions.

De telles collisions sont d'une part directement dangereuse pour la population au sol, et d'autre part peuvent entraîner la détérioration des objets en orbite avec lesquels les débris entrent en collision, générant alors de nouveaux débris spatiaux et augmentant alors les risques précédemment mentionnés. De plus, une collision entre des débris spatiaux et d'autres objets en orbite tels que les satellites peut entraîner une perte de fonction ou de contrôle de ces satellites. Plusieurs solutions ont été envisagées pour limiter ces risques. Ces solutions diffèrent notamment en fonction du type d'objets en orbite qui risquent d'entrer en collision.

Pour les objets en orbite manoeuvrables, il est possible d'anticiper une collision et ainsi de modifier activement la trajectoire de l'objet concerné pour éviter cette collision.

Pour les objets en orbite non manoeuvrables, il a été proposé d'agir sur au moins l'un des deux objets, par exemple à l'aide d'un laser pulsé placé en orbite et adapté pour dévier la trajectoire de l'objet concerné.

Le document US3380249 A divulgue un exemple d'un propulseur avec deux moyens d'entraînement, Le document de l'art antérieur US 2012/241562 A1 présente une autre solution qui consiste à générer un nuage de particules sur la trajectoire de l'un des objets. Lorsque l'objet pénètre dans le nuage, il subit une force de trainée qui le freine et modifie sa trajectoire.

Toutefois, les techniques permettant actuellement de générer ces nuages présentent des inconvénients. En effet, les techniques actuelles ne permettent pas de maîtriser la quantité de particules éjectées pour former le nuage et il est également complexe de former un nuage suffisamment dense pour permettre la déviation de l'objet en orbite, sans que les particules constitutives de ce nuage ne présentent une taille trop importante, au risque de générer de nouveaux débris spatiaux. De plus, ces techniques imposent la génération de nuages de très grandes tailles pour être efficaces. Selon les techniques actuellement connues, ces nuages sont par exemple formés de particules de Tungstène qui présentent un risque non négligeable lors de leur rentrée dans l'atmosphère ou de particules d'eau qui tendent à se sublimer trop rapidement dans l'espace, c'est-à-dire avant d'avoir pu dévier la trajectoire de l'objet concerné.

La présente invention vise à résoudre au moins ces inconvénients en proposant un système d'éjection de particules dans l'espace dans lequel la taille, la nature et la densité des particules sont contrôlées, tout comme le débit, la vitesse et la trajectoire d'éjection de ces particules.

Un objet de la présente invention concerne ainsi un système d'éjection de particules dans l'espace, comprenant au moins un module d'éjection des particules, au moins un conduit de stockage des particules qui débouche au niveau d'au moins un orifice d'injection des particules, le module d'éjection des particules étant en communication avec un environnement externe au système d'éjection des particules, le système d'éjection comprenant au moins un premier moyen d'entrainement des particules configuré pour entraîner les particules à fleur de l'au moins un orifice d'injection et au moins un deuxième moyen d'entrainement configuré pour entraîner les particules en dehors de l'au moins un conduit de stockage, le premier moyen d'entrainement et le deuxième moyen d'entrainement étant distincts.

Avantageusement le système d'éjection selon l'invention comprend une pluralité de conduits de stockage et autant d'orifices d'éjection, chaque conduit de stockage débouchant au niveau de l'un des orifices d'éjection. Les termes « à fleur de l'orifice de stockage » doivent ici être compris comme « au plus proche d'un plan dans lequel s'inscrit une extrémité du conduit de stockage qui débouche au niveau de l'orifice d'injection ».

La configuration du système d'éjection mentionné ci-dessus permet de contrôler la vitesse d'éjection des particules de manière à ce que cette vitesse soit considérée comme significativement inférieure aux vitesses constatées pour les systèmes de propulsion connus de l'art antérieur. Dit autrement, le module d'éjection des particules du système d'éjection selon l'invention n'est pas un moyen de propulsion du système d'éjection. Il n'a pas pour objectif de gérer le déplacement du système d'éjection dans l'espace. Au contraire, il a pour rôle de placer des particules dans un volume de l'espace.

Le dispositif d'éjection selon l'invention peut aussi comprendre un moyen de propulsion destiné à mettre en mouvement le système d'éjection dans son ensemble, ce moyen de propulsion étant distinct du module d'éjection des particules. Selon une autre alternative, le système d'éjection ne comprend pas de moyen de propulsion, mais il est solidaire d'une fusée suborbitale qui elle comprend son propre moyen de propulsion.

L'éjection mentionné ci-dessus est ainsi un placement contrôlé et à basse vitesse des particules, ou micro-grains.

Le deuxième moyen d'entraînement consiste en une mise en vitesse et un guidage des particules, ou micro-grains.

Le système d'éjection selon l'invention est configuré pour être opéré pendant 100 ms +/- 20%.

Selon l'invention, le conduit de stockage des particules peut par exemple présenter une section inférieure à une section de l'orifice d'injection au niveau duquel il débouche. En d'autres termes, un espace est alors ménagé entre le conduit de stockage des particules et l'orifice d'injection au niveau duquel il débouche. Alternativement, le conduit de stockage des particules peut présenter une section équivalente, ou sensiblement équivalente, à une section de l'orifice d'injection au niveau duquel il débouche. Autrement dit, selon cette alternative, une extrémité du conduit de stockage par laquelle les particules sont aptes à quitter ce conduit de stockage et un bord de l'orifice d'injection sont au contact l'un de l'autre.

Selon une caractéristique de la présente invention, le premier moyen d'entrainement comprend au moins un corps de vérin et au moins un piston apte à translater dans le corps de vérin, le corps de vérin et le piston délimitant, au moins partiellement, l'au moins un conduit de stockage des particules. Selon différents exemples de réalisation de la présente invention, on pourra prévoir que les pistons soient déplacés soit en leur appliquant directement une pression suffisante, soit en les équipant de tiges et en faisant bouger ces tiges, c'est-à-dire en appliquant la pression suffisante par l'intermédiaire de ces tiges. Avantageusement, le premier moyen d'entrainement comprend autant de vérins que le système d'éjection de particules comprend de conduits de stockage des particules.

Autrement dit, on comprend que les particules sont stockées dans le corps de vérin, c'est-à-dire que ce corps de vérin forme, au moins en partie, le conduit de stockage, et que le piston apte à translater dans le corps de vérin en question est configuré pour venir au contact de ces particules et pour pousser ces particules vers l'orifice d'injection. Un débit d'éjection des particules, c'est-à-dire un débit selon lequel les particules sont entraînées hors du système d'éjection, est ainsi proportionnel, entre autres, à une vitesse de déplacement du piston de l'au moins un vérin. En d'autres termes, on comprend que l'utilisation de pistons permet d'influer facilement sur le débit d'éjection des particules. Par exemple, afin de dévier un débris d'environ 1 tonne, une vitesse de déplacement du piston est configurée pour entraîner les particules vers l'environnement externe avec un débit compris entre 2,5 kg/s et 11 kg/s.

Selon l'invention, l'environnement externe du système d'éjection est par exemple constitué par le vide spatial.

Selon une caractéristique de l'invention, le deuxième moyen d'entrainement comprend au moins un dispositif de génération d'un flux de gaz. Autrement dit, le deuxième moyen d'entrainement est, selon cette caractéristique, réalisé par un flux de gaz configuré pour entraîner les particules vers l'environnement externe. Une vitesse d'éjection des particules, c'est-à-dire une vitesse que présentent les particules, d'abord injectées dans le module d'éjection, puis éjectées vers l'environnement externe, est proportionnelle, entre autres, à une vitesse de ce flux de gaz. Par exemple, pour dévier un débris d'une tonne, la vitesse du flux de gaz est paramétrée de sorte à éjecter les particules avec une vitesse comprise entre 50 m/s et 200 m/s. Les particules et le gaz se séparent en dehors du dispositif d'éjection. Le gaz est un gaz non-ionisé.

Selon un exemple de réalisation de l'invention, le dispositif de génération du flux de gaz comprend au moins un dispositif de stockage d'un fluide et au moins un moyen de transformation de ce fluide en flux de gaz. Le fluide peut par exemple être stocké à l'état gazeux, liquide ou supercritique. Selon différents exemples de réalisation de la présente invention, le flux de gaz peut être généré par un changement d'état du fluide ainsi stocké, par une combustion de ce fluide ou encore par réaction chimique. Il est entendu qu'il ne s'agit que d'exemples de réalisation de l'invention et que tout autre moyen permettant de générer un flux de gaz à une vitesse contrôlée peut être envisagé sans sortir du contexte de la présente invention.

Selon l'invention, le flux de gaz ainsi généré est ensuite propulsé vers, avantageusement autour de, l'au moins un orifice d'injection. Le flux de gaz circule ainsi autour de l'au moins un orifice d'injection et entraine avec lui les particules poussées à fleur de l'au moins un orifice d'injection par le premier moyen d'entrainement.

Selon une caractéristique de la présente invention, le module d'éjection des particules comprend au moins une chambre et au moins un divergent agencés successivement le long d'une droite d'extension principale du module d'éjection. Le divergent s'étend depuis la chambre et diverge en éloignement de cette chambre. Autrement dit, une section de ce divergent est croissante en éloignement de la chambre du module d'éjection. Le divergent est également en communication avec l'environnement externe au système d'éjection de particules de sorte qu'il forme un conduit d'éjection de ces particules. Selon une autre caractéristique de l'invention, au moins un corps central peut être agencé dans le divergent. Selon l'une quelconque de ces caractéristiques, une section de passage du flux de gaz est croissante depuis une extrémité du divergent par lequel il est en communication avec la chambre, en direction de l'environnement externe.

Optionnellement, un convergent peut être interposé entre la chambre et le divergent. Autrement dit, le convergent s'étend depuis la chambre et converge en éloignement de cette chambre, c'est-à-dire qu'une section de ce convergent diminue en éloignement de la chambre, et le divergent s'étend quant à lui depuis ce convergent, et diverge en éloignement de ce convergent. On comprend que lorsque le module d'éjection comprend ce convergent, une section de ce module d'éjection présente un rétrécissement à l'intersection du convergent et du divergent, c'est-à-dire que la section du module d'éjection est minimale à cette intersection. La section de passage du flux de gaz est alors croissante depuis ce rétrécissement du module d'éjection, en direction de l'environnement externe.

Selon l'invention, le flux de gaz formant le deuxième moyen d'entrainement est configuré pour entrer dans le module d'éjection par la chambre, puis pour rejoindre le divergent avant d'être éjecter, accompagné des particules, vers l'environnement externe. Tel qu'évoqué ci-dessus, lorsqu'un convergent est interposé entre la chambre et le divergent, le module d'éjection présente un rétrécissement de sa section situé à l'intersection entre ce convergent et le divergent. Il en résulte que le flux de gaz qui forme le deuxième moyen d'entrainement voit sa vitesse augmenter lorsqu'il traverse ce rétrécissement et présente ainsi une vitesse supérieure quand il quitte ce module d'éjection que lorsqu'il y entre.

Selon un premier mode de réalisation de la présente invention, l'au moins un orifice d'injection des particules débouche dans la chambre du module d'éjection.

Selon une première variante de ce premier mode de réalisation, le système d'éjection comprend au moins une plaque d'injection dans laquelle est ménagé l'au moins un orifice d'injection des particules, avantageusement la pluralité d'orifices d'injection, cette plaque d'injection étant logée dans la chambre du module d'éjection et l'au moins un orifice d'injection débouchant dans cette chambre du module d'éjection. Par exemple, ces orifices d'éjection peuvent être répartis dans un même plan et/ou en quinconce sur toute une surface de la plaque d'injection.

Ainsi, selon cette première variante du premier mode de réalisation de la présente invention, le flux de gaz qui forme le deuxième moyen d'entrainement des particules entre dans une première portion de la chambre délimitée par la paroi de fond de la chambre et par la plaque d'injection, entraine les particules dans une deuxième portion de la chambre qui s'étend entre la plaque d'injection et le divergent puis traverse le divergent avant de rejoindre l'environnement externe, ici formé, par exemple, par le vide spatial. Tel que précédemment évoqué, lorsque le module d'éjection comprend le convergent, le rétrécissement de la section du module d'éjection formé à l'intersection du convergent et du divergent engendre une accélération du flux de gaz, les particules entraînées par ce flux de gaz présentant ainsi une vitesse de déplacement inférieure dans la chambre et dans le convergent que dans le divergent.

Selon une deuxième variante de ce premier mode de réalisation, l'au moins un orifice d'injection des particules, avantageusement une pluralité d'orifices d'injection, est ménagé dans une paroi qui délimite la chambre du module d'injection. Par exemple, l'au moins un orifice d'injection, avantageusement une pluralité d'orifices d'injection, est ménagé dans une paroi de fond de cette chambre. Alternativement, l'au moins un orifice d'injection, avantageusement la pluralité d'orifices d'injection, est ménagé dans une paroi périphérique de cette chambre. Optionnellement, les orifices d'injection peuvent également être répartis entre la paroi de fond et la paroi périphérique de la chambre. Selon encore une autre alternative, une partie des orifices d'injection est ménagée dans la paroi périphérique de la chambre et une autre partie de ces orifices d'injection est ménagée dans une plaque d'injection.

Selon un deuxième mode de réalisation de la présente invention, l'au moins un orifice d'injection des particules débouche dans le divergent du module d'éjection. Avantageusement, une pluralité d'orifices d'éjection des particules débouche dans le divergent du module d'éjection.

Selon ce deuxième mode de réalisation, l'au moins un orifice d'éjection, avantageusement la pluralité d'orifices d'éjection, est ménagé dans une paroi qui délimite, au moins partiellement, le divergent. Par exemple, ces orifices d'injection peuvent être répartis autour de ce divergent. Par exemple ces orifices d'éjection peuvent être répartis régulièrement, en couronne, autour du divergent. Ces orifices d'éjection sont ainsi ménagés en aval de la chambre du module d'éjection par rapport à un sens de circulation du flux de gaz. Selon ce deuxième mode de réalisation, lorsque le module d'éjection comprend le convergent, le flux de gaz qui forme le deuxième moyen d'entrainement des particules traverse la section rétrécie du module d'éjection avant d'entrainer les particules. En d'autres termes, le flux de gaz est accéléré avant d'entrainer les particules ce qui permet un meilleur contrôle du débit d'éjection des particules dans l'environnement externe.

Selon un troisième mode de réalisation de la présente invention, l'au moins un orifice d'injection est ménagé dans une paroi délimitant, au moins partiellement, le corps central et l'au moins un orifice d'injection débouche dans l'environnement externe. Par exemple, ce corps central présente une forme complémentaire, au moins en partie, d'une forme du divergent.

Selon une variante de ce troisième mode de réalisation, la paroi délimitant, au moins partiellement, le corps central comprend un sommet, l'au moins un orifice d'injection débouchant sur l'environnement externe au niveau de ce sommet. On entend par « sommet de la paroi délimitant le corps central » un point de cette paroi le plus proche de l'environnement externe par lequel passe la droite d'extension principale du module d'éjection.

Selon l'un quelconque des modes de réalisation de la présente invention, le divergent peut comprendre un guide concentrateur ménagé à une extrémité du divergent par laquelle il débouche sur l'environnement externe. Par exemple, ce guide concentrateur est formé d'un prolongement de la paroi qui délimite, au moins partiellement, le divergent. Cette paroi s'étend ainsi vers un centre de l'extrémité de ce divergent par laquelle il débouche sur l'environnement externe. On entend par « centre de l'extrémité », un point de cette extrémité équidistant de tous les points de la paroi qui délimite cette extrémité. Il est entendu que l'extrémité par laquelle le divergent débouche sur l'environnement externe est opposée, le long de la direction d'extension principale du module d'éjection, à une autre extrémité de ce divergent par laquelle il est relié, directement ou indirectement, à la chambre.

Selon l'invention, les particules ont une taille comprises entre 5 µm et 200 µm, et peuvent être appelées micro-grains. Des particules présentant une taille inférieure à 5 µm seraient totalement emportées par le flux de gaz formant le deuxième moyen d'entraînement, et il serait alors beaucoup plus complexe de contrôler l'éjection des particules. Au-delà de 200 µm, les particules peuvent être considérées comme des débris spatiaux et sont donc trop grandes pour être utilisées sans risque de création d'autres débris spatiaux. Avantageusement, les particules présentent une taille comprise entre 50 µm et 60 µm afin d'éviter qu'elles ne soient entraînées entre le piston et le corps de vérin où elles pourraient rester coincées.

D'une manière générale, les particules mentionnés dans le présent document peuvent également être considérées comme des micro-grains, compte tenu de leur taille. Il ne s'agit pas d'atomes mais bien de micro-grains stockées en vrac dans le conduit de stockage, un unique micro-grain comprenant plusieurs milliards d'atomes.

Par exemple, les particules sont des particules métalliques. Avantageusement, les particules sont des particules de cuivre. Le cuivre présente notamment l'avantage d'être disponible dans le commerce à moindre coût et présente une densité suffisante pour dévier les débris spatiaux dont la trajectoire croise ces particules.

La présente invention concerne également un dispositif de déviation de débris spatiaux comprenant au moins une fusée suborbitale et au moins un système d'éjection de particules selon l'invention. Selon l'invention, le système d'éjection de particules et la fusée suborbitale sont assemblés l'un sur l'autre, le long d'un axe d'extension principal du dispositif de déviation. La fusée suborbitale est configurée pour amener le système d'éjection de particules dans l'espace afin que les particules qu'il contient puissent être éjectées dans l'espace, en une localisation prédéterminée, et ainsi amener les particules sur une trajectoire du débris à dévier. L'impact entre le débris en question et les particules ainsi éjectées modifie la trajectoire de ce débris, de sorte que la collision anticipée peut être évitée. On entend ici par « fusée suborbitale », une fusée qui ne reste pas en orbite. Autrement dit, cette fusée permet simplement d'acheminer le système d'éjection de particules à un endroit déterminé pour permettre l'éjection des particules.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig. 1] illustre, schématiquement, selon une coupe longitudinale et latérale, un système d'éjection selon une première variante d'un premier mode de réalisation de la présente invention ;
[Fig. 2] illustre, schématiquement, vue de dessus, une plaque d'injection du système d'éjection selon la première variante du premier mode de réalisation illustré sur la figure 1 ;
[Fig. 3] illustre, schématiquement, selon une coupe longitudinale et latérale, le système d'éjection selon une deuxième variante du premier mode de réalisation de la présente invention ;
[Fig. 4] illustre, schématiquement, selon une coupe longitudinale et latérale, le système d'éjection selon un deuxième mode de réalisation de la présente invention ;
[Fig. 5] illustre, schématiquement, vu de dessus, le système d'éjection de particules selon le deuxième mode de réalisation illustré sur la figure 4 ;
[Fig. 6] illustre, schématiquement, selon une coupe longitudinale et latérale, le système d'éjection selon un troisième mode de réalisation de la présente invention ;
[Fig. 7] illustre, schématiquement, vu de dessus, le système d'éjection selon le troisième mode de réalisation de la présente invention illustré sur la figure 6 ;
[Fig. 8] illustre, schématiquement, selon une coupe longitudinale et latérale, le système d'éjection selon une variante du troisième mode de réalisation de l'invention ;
[Fig. 9] illustre, schématiquement, un dispositif de déviation de débris spatiaux équipé d'un système d'éjection de particules selon l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique ou pour différencier l'invention par rapport à l'état de la technique antérieur.

Sur les figures, les dénominations longitudinale, transversale, latérale, gauche, droite, dessus, dessous, se réfèrent à l'orientation, dans un trièdre d'un système d'éjection 100 selon l'invention. Dans ce repère, un axe longitudinal Lg représente une direction longitudinale, un axe transversal T représente une direction transversale, et un axe latéral Lat représente une direction latérale de l'objet considéré. Dans ce repère, un plan longitudinal et latéral est parallèle à un plan dans lequel s'inscrivent l'axe longitudinal Lg et l'axe latéral Lat, un plan transversal et latéral est parallèle à un plan dans lequel s'inscrivent l'axe transversal T et l'axe latéral Lat et un plan longitudinal et transversal est parallèle à un plan dans lequel s'inscrivent l'axe longitudinal Lg et l'axe transversal T. Les termes « dessus » et « dessous » se rapporte à une position de l'objet concerné le long de l'axe longitudinal Lg.

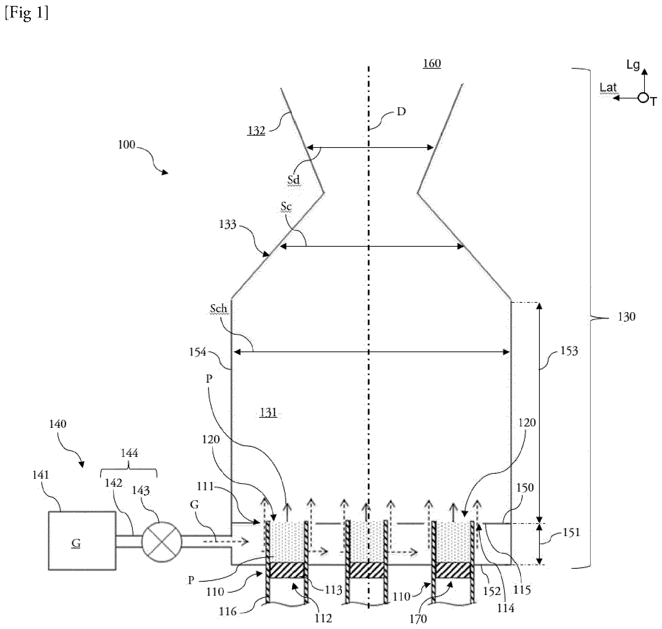

Sur les figures 1, 3, 4, 6 et 8, les flèches en traits pleins représentent les mouvements des particules P destinées à être éjectées par le système d'éjection 100 selon l'invention et les flèches en traits discontinus représentent un flux de gaz G adapté pour entraîner les particules P. Dans la description qui suit, les termes « système d'éjection » et « système » sont utilisés sans distinction.

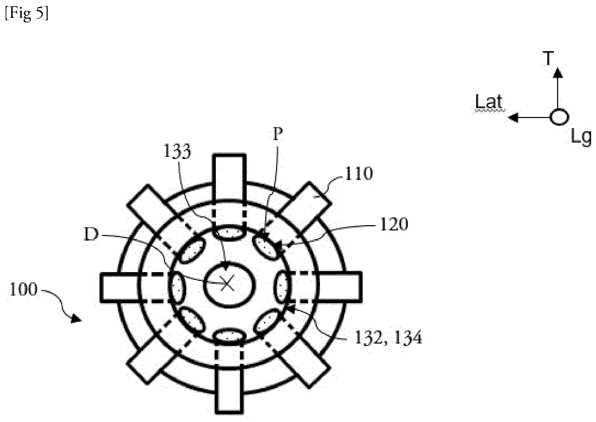

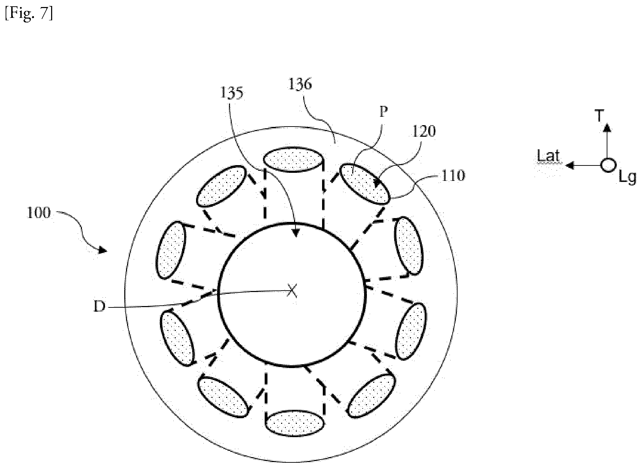

Les figures illustrent, schématiquement, le système d'éjection 100 selon différents modes de réalisation de la présente invention. Plus particulièrement, les figures 1, 3, 4, 6 et 8 représentent le système d'éjection 100 selon l'invention, vu selon une coupe réalisée selon un plan longitudinal et latéral et les figures 5 et 7 sont des vues de dessus du système d'éjection 100 selon deux modes de réalisation différents.

Dans un premier temps, nous allons décrire les caractéristiques communes à l'ensemble des modes de réalisation de l'invention avant de détailler les caractéristiques spécifiques à chaque mode de réalisation.

Le système d'éjection 100 de particules selon l'invention comprend au moins un conduit de stockage 110 des particules P, au moins un orifice d'injection 120 des particules P au niveau duquel débouche l'au moins un conduit de stockage 110, et au moins un module d'éjection 130 des particules P. Avantageusement, le système d'éjection 100 peut comprendre une pluralité de conduits de stockage 110 et au moins autant d'orifices d'injection 120.

Le module d'éjection 130 s'étend principalement le long d'une droite d'extension D parallèle à l'axe longitudinal Lg et comprend au moins une chambre 131 et au moins un divergent 132, la chambre 131 et le divergent 132 étant agencés successivement le long de la droite d'extension D. Selon un exemple de réalisation par exemple illustré sur les figures 1, 3 et 4, un convergent 133 peut être interposé entre la chambre 131 et le divergent 132. Selon cet exemple, le convergent 133 s'étend ainsi depuis la chambre 131 et converge en éloignement de cette chambre 131, c'est-à-dire qu'une section Sc de ce convergent 133 diminue en éloignement de la chambre 131. Le divergent 132 s'étend quant à lui depuis le convergent 133 et diverge en éloignement de la chambre 131. Autrement dit, une section Sd de ce divergent 132 augmente en éloignement du convergent 133, c'est-à-dire en direction d'un environnement externe 160 au module d'éjection 130 sur lequel débouche le divergent 132. La chambre 131 présente quant à elle une section Sch constante. Il en résulte que la section la plus petite du module d'éjection 130 se situe à une intersection entre le convergent 133 et le divergent 132, c'est-à-dire que la section du module d'éjection 130 est rétrécie au niveau de cette intersection.

Il est entendu qu'il ne s'agit que d'un exemple non limitatif de la présente invention. Alternativement, le module d'éjection peut par exemple être dépourvu de convergent sans sortir du contexte de la présente invention. Selon cette alternative, le divergent s'étend alors directement depuis la chambre, la section de ce divergent étant croissante en éloignement de cette chambre.

Tel que précédemment évoqué, chaque conduit de stockage 110 des particules P débouche sur un orifice d'injection 120. Plus particulièrement, une première extrémité longitudinale 111 de chaque conduit de stockage 110 est ouverte sur l'orifice d'injection 120 correspondant et une deuxième extrémité longitudinale 112 de ce conduit de stockage 110 est ouverte. Selon l'invention, chaque conduit de stockage 110 peut présenter une section inférieure à une section de l'orifice d'injection 120 au niveau duquel il débouche. Alternativement, chaque conduit de stockage 110 peut présenter une section équivalente, ou sensiblement équivalente à une section de l'orifice d'injection 120 au niveau duquel il débouche. Autrement dit, tel que cela sera plus amplement détaillé ci-dessous, selon cette alternative, la première extrémité longitudinale 111 du conduit de stockage 110 est en contact avec un bord 115 qui délimite l'orifice d'injection 120 au niveau duquel débouche ce conduit de stockage 110.

Selon les exemples illustrés ici, au moins un piston 113 est logé dans chaque conduit de stockage 110, ces pistons 113 étant au contact des particules contenues dans les conduits de stockage correspondant. Selon l'invention, le système d'éjection 100 comprend au moins autant de pistons 113 que de conduits de stockage 110 des particules P et que d'orifices d'éjection 120. Ainsi, la description donnée ci-dessous pour un piston 113, pour un conduit de stockage 110 et pour un orifice d'injection 120 est directement transposable aux autres pistons 113, aux autres conduits de stockage 110 et aux autres orifices d'éjection 120.

Ces pistons 113 forment un premier moyen d'entrainement 170 des particules P configuré pour pousser ces particules P stockées dans les conduits de stockage 110 correspondants à fleur de l'orifice d'injection 120 au niveau duquel débouchent ces conduits de stockage 110. Autrement dit, on comprend que ce premier moyen d'entrainement 170 est formé par au moins un vérin qui comprend un corps de vérin 116 dans lequel le piston 113 correspondant est apte à translater, le corps de vérin 116 et le piston 113 délimitant, au moins en partie, l'un des conduits de stockage 110. Il est entendu qu'il ne s'agit que d'un exemple de réalisation et que tout autre moyen d'entrainement présentant les mêmes fonctionnalités que celles décrites ici pour les pistons 113 peut être envisagé sans sortir du contexte de la présente invention.

Avantageusement, l'utilisation de vérins comme premier moyen d'entrainement 170 des particules P permet de maîtriser un débit d'éjection des particules P. En effet, le débit d'éjection de ces particules P est au moins proportionnel à une vitesse de déplacement des pistons 113 qui participent à former ces vérins. Par exemple, ces vérins peuvent être des vérins pneumatiques. Alternativement, ces vérins sont entraînés par un moteur. En tout état de cause, ces vérins peuvent être pilotés indépendamment les uns des autres ou simultanément, et leur translation peut être totale ou variable. Par exemple, pour dévier un débris d'une tonne, la vitesse de déplacement des pistons 113 est paramétrée pour obtenir un débit d'éjection des particules compris entre 2,5 kg/s et 11 kg/s.

Le système d'éjection 100 selon l'invention comprend également au moins un deuxième moyen d'entrainement 140 configuré pour entraîner les particules P en dehors du conduit de stockage 110 dans lequel elles sont stockées. Selon l'invention, ce deuxième moyen d'entrainement 140 comprend au moins un dispositif de génération d'un flux de gaz G. Par exemple, ce dispositif de génération du flux de gaz G comprend au moins un dispositif de stockage 141 d'un fluide et au moins un moyen 144 de transformation de ce fluide en flux de gaz G. Par exemple, le fluide peut être stocké à l'état liquide, à l'état gazeux ou à l'état supercritique. Le moyen de transformation peut quant à lui comprendre des moyens entraînant un changement d'état du fluide stocké, une réaction chimique ou encore une combustion de ce fluide. Il est entendu que tout autre moyen permettant de générer un flux de gaz peut être envisagé sans sortir du contexte de la présente invention.

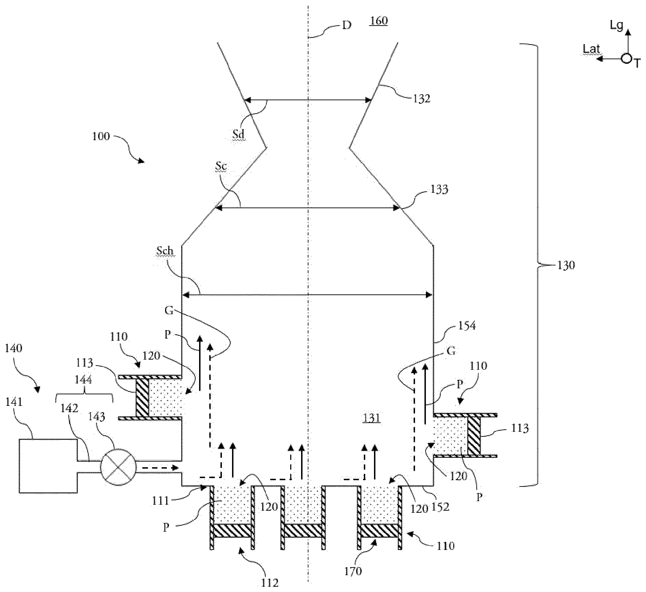

Selon les exemples illustrés ici, et plus particulièrement sur les figures 1 et 3, le dispositif de stockage 141 est configuré pour stocker du gaz comprimé et le moyen 144 de transformation de ce gaz comprimé en flux de gaz G comprend au moins un conduit 142 sur lequel est agencé au moins un organe de détente 143, ce conduit 142 s'étendant entre le dispositif de stockage 141 et l'un des conduits de stockage 110. Tel que représenté, le dispositif de stockage 141 est agencé en dehors du module d'éjection 130. Par exemple, le gaz utilisé peut être stocké dans le dispositif de stockage 141 à haute pression, par exemple une pression comprise entre 50 bar et 200 bar absolu. L'organe de détente 143 permet de diminuer la pression du gaz stocké à haute pression dans le dispositif de stockage 141, par exemple jusqu'à une pression d'environ 1 bar absolu, avant de l'envoyer vers le conduit de stockage 110. Avantageusement, cet organe de détente 143 a également une fonction de vanne, c'est-à-dire que cet organe de détente 143 est configuré pour prendre une position ouverte dans laquelle il laisse passer le gaz G en le détendant ou une position fermée dans laquelle il ne laisse pas passer le gaz G. Le gaz G dont il est question ici peut par exemple être de l'air, du dioxyde de carbone ou du diazote.

Selon l'invention, le flux de gaz G entre dans le module d'éjection 130 par la chambre 131 de ce module d'éjection 130 et en ressort par le divergent 132. Le cas échéant, ce flux de gaz G traverse ainsi, dans cet ordre, la chambre 131, le convergent 133 et le divergent 132. Tel qu'évoqué ci-dessus, un rétrécissement de la section du module d'éjection 130 est ménagé entre le convergent 133 et le divergent 132 de sorte que ce flux de gaz G présente une vitesse supérieure lorsqu'il quitte le module d'éjection 130 que lorsqu'il y entre. Avantageusement, au moins une arrivée de gaz G est ménagée à proximité des premières extrémités longitudinales 111 des conduits de stockage 110, c'est-à-dire à proximité des extrémités de ces conduits 110 par lesquelles les particules P sont entraînées hors de ceux-ci.

Selon l'un quelconque des modes de réalisation de la présente invention décrits ci-dessous, la vitesse de déplacement des particules P éjectées est comprise entre 50 m/s et 200 m/s. Les particules P sont par exemple des particules métalliques choisies car faisant partie des particules connues qui présentent la plus forte densité, sans néanmoins s'agglomérer lors de la mise en position du système d'éjection 100. Par exemple, ces particules P sont des particules de cuivre qui présentent un diamètre compris entre 50 µm et 60 µm. Avantageusement, l'utilisation de particules de cette taille permet d'éviter que celles-ci ne s'engouffrent et ne se coincent entre le corps de vérin 110 et le piston 113 correspondant.

Optionnellement, un dispositif d'obturation peut être agencé sur l'au moins un orifice d'injection. Ce dispositif d'obturation est alors configuré pour s'ouvrir lorsque le premier moyen d'entrainement entraine les particules à fleur de l'orifice d'injection, sans néanmoins se détacher pour éviter d'obstruer le module d'éjection, assurant ainsi le bon fonctionnement du système d'éjection selon l'invention. Autrement dit, ce dispositif d'obturation est configuré pour permettre l'injection des particules dans le module d'éjection et/ou l'éjection de ces particules dans l'environnement externe, tout en restant solidaire du système d'éjection de particules. Par exemple, un tel dispositif d'obturation peut être formé par un opercule fixé sur l'au moins un conduit de stockage, configuré pour se déchirer lorsqu'il est soumis à une pression prédéterminée, tout en restant solidaire de l'au moins un conduit de stockage. Alternativement, le dispositif d'obturation peut être formé par un couvercle relié au corps du vérin par l'intermédiaire d'une charnière, dont l'ouverture est assurée par un ressort et dont le maintien en position fermée est assuré par un verrou, un système électromécanique permettant de déverrouiller ce verrou pour ouvrir le conduit de stockage.

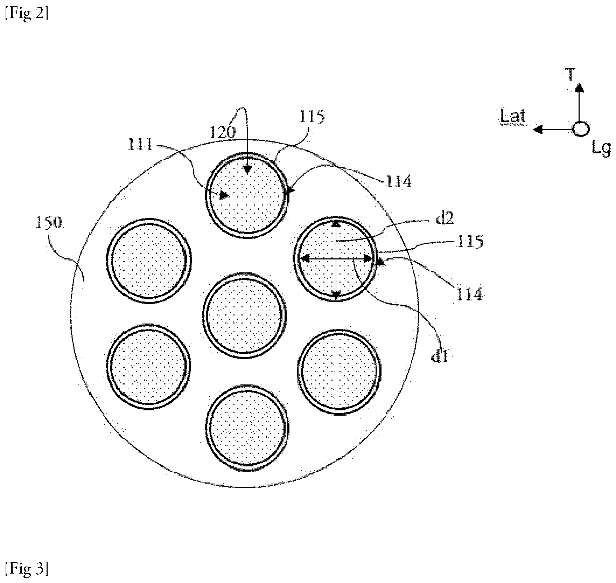

Les figures 1 à 3 illustrent, schématiquement, un premier mode de réalisation de la présente invention. Selon ce premier mode de réalisation, les orifices d'injection 120 débouchent dans la chambre 131 du module d'éjection 130. Les figures 1 et 2 illustrent une première variante de ce premier mode de réalisation et la figure 3 illustrent une deuxième variante de ce premier mode de réalisation, les figures 1 et 3 illustrant le système d'éjection 100 selon des coupes longitudinale et latérale. Ces figures illustrent des exemples de réalisation dans lesquelles le module d'éjection 130 comprend la chambre 131, le convergent 133 et le divergent 132, mais il est entendu qu'il ne s'agit que d'exemples de réalisation et que le module d'éjection 130 pourrait être dépourvus de convergent 133 sans sortir du contexte de la présente invention.

Selon la première variante du premier mode de réalisation, le système d'éjection 100 comprend au moins une plaque d'injection 150 dans laquelle est ménagé l'au moins un orifice d'injection 120. Selon l'exemple illustré, une pluralité d'orifices d'éjection 120 est ménagée dans cette plaque d'injection 150. Cette plaque d'injection 150 est logée dans la chambre 131 et partage ainsi cette chambre 131 en une première portion 151 qui s'étend entre une paroi de fond 152 de la chambre 131 et la plaque d'injection 150 et en une deuxième portion 153 qui s'étend entre la plaque d'injection 150 et le convergent 133. Les conduits de stockage 110 sont logés, au moins partiellement, dans la chambre 131 du module d'éjection 130 des particules P, et plus particulièrement dans la première portion 151 de cette chambre 131. Avantageusement, la plaque d'injection 150 présente une dimension latérale, c'est-à-dire une dimension mesurée entre deux extrémités de cette plaque d'injection 150 opposées le long de l'axe latéral Lat, identique, ou sensiblement identique, à la section S1, la plus grande, de la chambre 131. Autrement dit, cette plaque d'injection 150 est en contact avec une paroi périphérique 154 qui participe à délimiter la chambre 131 du module d'éjection 130.

Selon cette première variante du premier mode de réalisation de la présente invention, les pistons 113 - dont trois sont illustrés sur la figure 1 - sont adaptés pour appliquer une force longitudinale, c'est-à-dire une force qui s'exerce parallèlement à l'axe longitudinal Lg du trièdre illustré, sur les particules P stockées dans les conduits de stockage 110 correspondants, de sorte à entraîner les particules P à fleur des orifices d'éjection 120 concernés. Dans le même temps, l'organe de détente 142 est dans sa position ouverte de sorte que du gaz sous pression est détendu et envoyé vers la chambre 131 du module d'éjection 130, et plus particulièrement vers la première portion 151 de cette chambre 131. Le flux de gaz G alors détendu est apte à circuler autour des conduits de stockage 110 des particules P.

Tel que représenté, une section du conduit de stockage 110 est inférieure à une section de l'orifice d'injection 120 au niveau duquel il débouche. Autrement dit, un espace 114 est ménagé entre le conduit de stockage 110 et le bord 115 qui délimite l'orifice d'injection 120 au niveau duquel débouche le conduit de stockage 110 concerné. En s'engouffrant dans ces espaces 114, le flux de gaz G entraine les particules P amenées à fleur des orifices d'éjection 120 par le premier moyen d'entrainement 170, en l'espèce amenées par les pistons 113, vers la deuxième portion 153 de la chambre 131. Les particules P rejoignent ainsi, dans un premier temps, la deuxième portion 153 de la chambre 131, puis elles passent par le convergent 133 avant de rejoindre le divergent 132 du module d'éjection 130.

Tel que précédemment évoqué, un rétrécissement de la section du module d'éjection 130 est formé entre le convergent 133 et le divergent 132, de sorte que la vitesse du flux de gaz G est accélérée par son passage à travers ce rétrécissement, entraînant également une accélération de la vitesse de déplacement des particules P qu'il entraine.

Le divergent 132 est par ailleurs en communication avec l'environnement externe 160 au système d'éjection 100 dans lequel les particules P sont ainsi éjectées, cet environnement étant par exemple le vide spatial en condition d'utilisation du système d'éjection 100.

Il est entendu que lorsque le module d'éjection est dépourvu de convergent, la description qui vient d'être donnée s'applique, à la différence que le flux de gaz entraine les particules vers la deuxième portion de la chambre, puis directement vers le divergent.

La figure 2 représente, schématiquement, la plaque d'injection 150 du système d'éjection selon la première variante du premier mode de réalisation de la présente invention, vue de dessus, c'est-à-dire vue depuis les premières extrémités longitudinales 111 des conduits de stockage.

Tel que précédemment évoqué, plusieurs orifices d'éjection 120 sont ménagés dans la plaque d'injection 150. Selon l'exemple illustré, la plaque d'injection 150 est circulaire et sept orifices d'éjection 120 y sont ménagés. Les orifices d'éjection 120 sont répartis en quinconce sur toute une surface de cette plaque d'injection 150. Une telle répartition permet avantageusement de ménager un plus grand nombre d'orifice d'injection 120 qu'une répartition en lignes par exemple. Le système d'éjection comprend en outre autant de conduits de stockage que d'orifices d'éjection 120.

Selon l'exemple illustré, les conduits de stockage 110 ont une section circulaire qui présente un premier diamètre d1. Les orifices d'éjection 120 ont quant à eux une forme circulaire qui présente un deuxième diamètre d2, le premier diamètre d1 étant, tel que précédemment évoqué, inférieur au deuxième diamètre d2 de sorte qu'un espace annulaire 114 est ménagé entre chaque conduit de stockage 110 et le bord 115 de la plaque d'injection 150 qui délimite l'orifice d'injection 120 dans lequel le conduit de stockage 110 débouche.

Selon l'exemple illustré sur les figures 1 et 2, l'ensemble des orifices d'éjection 120 et des conduits de stockage 110 sont identiques les uns aux autres de sorte que les références données pour l'un d'entre eux sont directement transposables aux autres.

Il est entendu que la description qui précède n'est donnée qu'à titre d'exemple et qu'on pourra prévoir un nombre supérieur ou inférieur d'orifices d'injection 120 et/ou de conduits de stockage 110 sans sortir du contexte de la présente invention.

Selon la deuxième variante du premier mode de réalisation illustrée sur la figure 3, le système d'éjection est dépourvu de plaque d'injection. Tel qu'illustré, selon cette deuxième variante, les orifices d'injection 120 sont ménagés directement dans la paroi de fond 152 et/ou dans la paroi périphériques 154 qui délimitent la chambre 131. Selon l'exemple illustré, une partie des orifices d'injection 120 sont ménagés dans la paroi de fond 152 de la chambre 131 et une autre partie de ces orifices d'injection sont ménagés dans la paroi périphérique 154 de cette chambre 131. En tout état de cause, la position des orifices d'injection est choisie de sorte que ces orifices d'injection débouchent dans la chambre 131 du module d'éjection 130. Ainsi, selon différents exemples non illustrés ici, on pourra par exemple prévoir que la totalité des orifices d'injection soit ménagée dans la paroi de fond ou dans la paroi périphérique de la chambre. Alternativement, une partie des orifices d'injection peut être ménagée dans la paroi périphérique de la chambre et une autre partie de ces orifices d'injection peut être ménagée dans une plaque d'injection telle que décrite ci-dessus.

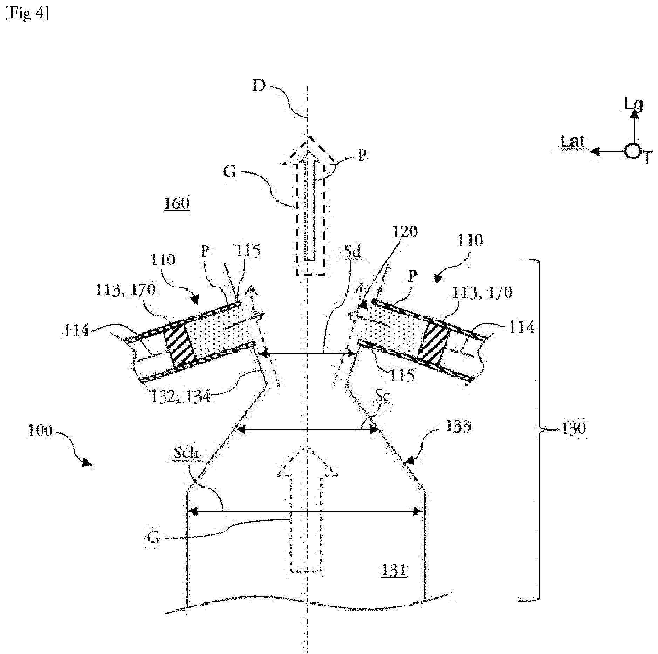

Les figures 4 et 5 illustrent un deuxième mode de réalisation selon l'invention. Selon ce deuxième mode de réalisation les orifices d'injection 120 débouchent dans le divergent 132 du module d'éjection 130.

Selon ce deuxième mode de réalisation, les conduits de stockage 110 sont agencés autour du divergent 132 du module d'éjection 130. Autrement dit, les orifices d'éjection 120 - deux d'entre eux étant visibles sur la figure 4 - sont ménagés dans une paroi 134 qui délimite, au moins partiellement, le divergent 132. Selon ce deuxième mode de réalisation, les sections des conduits de stockages 110 sont sensiblement identiques aux sections des orifices d'éjection 120 au niveau desquels ils débouchent. Autrement dit, chaque conduit de stockage 110 est en contact avec le bord 115 de l'orifice d'injection 120 au niveau duquel il débouche. Tel que précédemment décrit, le deuxième moyen d'entrainement est formé par le flux de gaz G qui entre dans le module d'éjection 130 par la chambre 131. Ainsi, selon ce deuxième mode de réalisation, les orifices d'éjection 120 débouchent en aval de la chambre 131, par rapport à un sens de circulation du gaz G dans le module d'éjection 130. Plus précisément, selon l'exemple illustré, ces orifices d'injection 120 débouchent en aval du convergent 133 selon le sens de circulation du gaz G dans le module d'éjection 130. En passant à proximité des orifices d'éjection 120, le flux de gaz G entraine les particules P amenées à fleur d'orifices d'éjection 120 par le premier moyen d'entrainement 170, ici encore formé par exemple par les pistons 113. Le divergent 132 est par ailleurs ouvert sur l'environnement externe 160 au système d'éjection 100 dans lequel les particules P sont finalement éjectées.

Selon ce deuxième mode de réalisation, le flux de gaz G passe à travers la section rétrécie du module d'éjection 130, c'est-à-dire au niveau du point d'intersection du convergent 133 et du divergent 132, avant d'entrainer les particules P, de sorte que ces particules P sont entraînées par un flux de gaz G préalablement accéléré. Avantageusement, une telle configuration permet un meilleur contrôle de la vitesse d'éjection des particules P dans l'environnement externe 160. Selon ce deuxième mode de réalisation, chaque piston 113 est entraîné en translation par une tige 114 qui lui est propre. Tel que précédemment évoqué, le module d'éjection pourrait être dépourvu du convergent sans sortir du contexte de la présente invention, auquel cas le flux de gaz présente une vitesse constante, ou sensiblement constante, entre la chambre et le divergent.

La figure 5 représente, vue de dessus le module d'éjection 130 selon le deuxième mode de réalisation illustrée sur la figure 4. Cette figure 5 rend ainsi visible l'intersection entre le convergent 133 et le divergent 132 du module d'éjection par laquelle le flux de gaz rejoint le divergent 132 pour entraîner les particules P vers l'environnement externe 160 ainsi que le divergent 132 de ce module d'éjection. Cette figure 5 rend en outre visible les orifices d'éjection 120, ici au nombre de huit, la paroi 134 dans laquelle ces orifices d'éjection 120 sont ménagés et qui participe à délimiter le divergent 132 et les conduit de stockage 110 des particules P. Selon l'exemple illustré, les orifices d'éjection 120 présentent une forme circulaire mais il est entendu qu'il ne s'agit que d'un exemple et que ces orifices d'éjection 120 pourraient présenter une forme différente sans sortir du contexte de la présente invention. De même, le nombre d'orifices d'éjection 120 représenté n'est pas limitatif de la présente invention. Tel que représenté, les conduits de stockage 110 ainsi que les orifices d'éjection 120 au niveau desquels débouchent ces conduits de stockage 110 sont répartis autour de la droite d'extension D principale du module d'éjection. Avantageusement, une telle répartition permet de stocker puis d'éjecter une quantité de particules compatible avec la fonction à remplir, en l'espèce éjecter des particules sur une trajectoire d'un débris spatial pour dévier ce débris spatial.

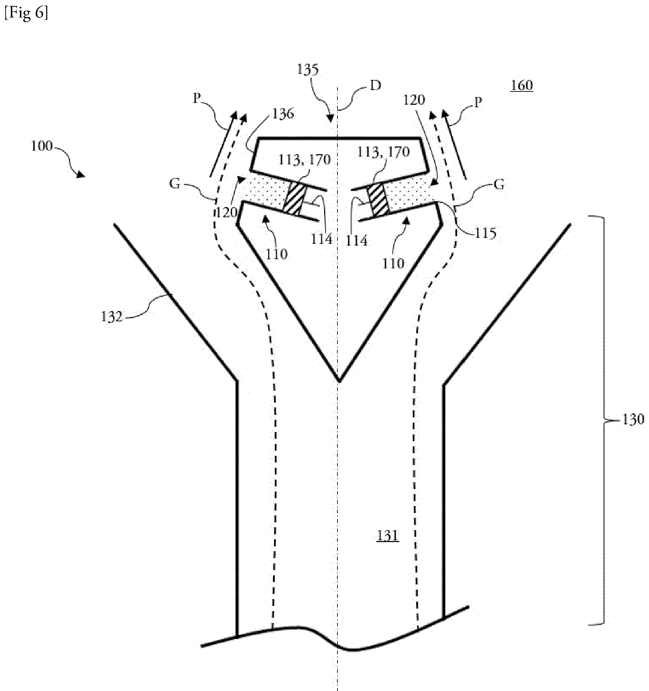

La figure 6 illustre le système d'éjection 100, vue dans une coupe longitudinale et latérale, selon un troisième mode de réalisation de la présente invention. Selon ce troisième mode de réalisation, le module d'éjection 130 comprend la chambre 131, le divergent 132 et un corps central 135 logé dans le divergent 132. Tel que représenté, le corps central 135 présente une forme au moins partiellement complémentaire à une forme du divergent 132. Tel qu'illustré, les conduits de stockage 110 sont quant à eux logés dans le corps central 135 et les orifices d'éjection 120 débouchent dans l'environnement externe 160. Selon ce troisième mode de réalisation, la section de chaque conduit de stockage 110 est identique, ou sensiblement identique, à la section de l'orifice d'injection 120 au niveau duquel il débouche de ce sorte que chaque conduit de stockage 110 est en contact avec le bord 115 de l'orifice d'injection 120 au niveau duquel il débouche. Tel que représenté, le flux de gaz G est propulsé dans la chambre 131 puis rejoint le divergent 132 dans lequel il longe une paroi 136 qui délimite le corps central 135 et dans laquelle sont ménagés les orifices d'éjection 120.

De façon analogue à ce qui a été précédemment décrit en référence au premier mode de réalisation, en passant à proximité des orifices d'éjection 120, le flux de gaz G entraine avec lui les particules P amenées à fleur de ces orifices d'éjection 120 par le premier moyen d'entrainement 170, en l'espèce formé par les pistons 113 entraînés en translation par leurs tiges 114 respectives. Les particules P sont ainsi éjectées dans l'environnement externe 160 au système d'éjection 100.

La figure 7 est une vue schématique, de dessus, du système d'éjection 100 selon le troisième mode de réalisation illustré sur la figure 6. Cette figure rend ainsi visible la paroi 136 qui délimite le corps central 135 logé dans le divergent du module d'éjection 130 ainsi que les orifices d'éjection 120 ménagés dans cette paroi 136. Selon l'exemple illustré, une dizaine d'orifices d'éjection 120 sont répartis, régulièrement, en couronne autour de la droite d'extension D principale du module d'éjection 130 et chaque orifice d'injection 120 présente une forme circulaire. A nouveau une telle répartition permet de stocker puis d'éjecter une quantité de particules compatibles avec la fonction à remplir, en l'espèce dévier un débris spatial. Il est entendu qu'il ne s'agit que d'un exemple de réalisation et que le système d'éjection 100 pourrait comprendre un nombre différent d'orifices d'éjection 120 et que ces orifices d'éjection 120 pourraient présenter une forme non circulaire sans sortir du contexte de la présente invention.

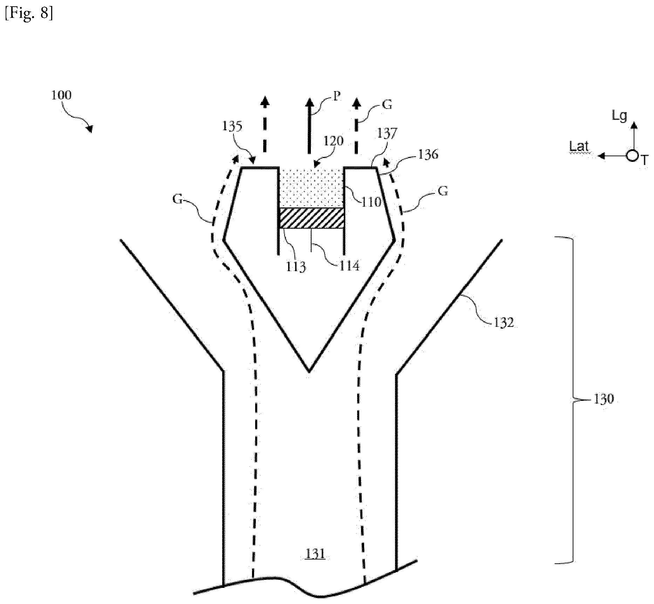

La figure 8 illustre quant à elle un exemple d'application particulier du troisième mode de réalisation dans lequel le système d'éjection 100 des particules P comprend un unique orifice d'injection 120 qui débouche sur l'environnement externe 160 au système d'éjection 100 par un sommet 137 du corps central 135 logé dans le divergent 132 du module d'éjection 130. Selon cet exemple d'application particulier, la section du conduit de stockage 110 est équivalente à la section de l'orifice d'injection 120 de sorte que ce conduit de stockage 110 est en contact avec le bord 115 de l'orifice d'injection 120 au niveau duquel il débouche. Cet exemple d'application particulier diffère du troisième mode de réalisation décrit ci-dessus en référence aux figures 6 et 7, en ce que le flux de gaz G ne passe pas directement sur l'orifice d'injection 120, mais génère des turbulences en passant à proximité de cet orifice d'injection 120, ces turbulences entraînant alors les particules P poussées à fleur de l'orifice d'injection 120 vers l'environnement externe 160. Autrement dit, le flux de gaz G est projeté le long de la paroi 136 qui délimite le corps central 135. Ce flux de gaz G progresse jusqu'au sommet 137 de ce corps central 135 et aspire les particules P qui affleurent l'orifice d'injection 120 ménagé dans ce sommet 137. Les particules P poussées à fleur de l'orifice d'injection 120 par le premier moyen d'entrainement 170 sont ainsi éjectées vers l'environnement externe 160 lorsque le flux de gaz G les dépasse.

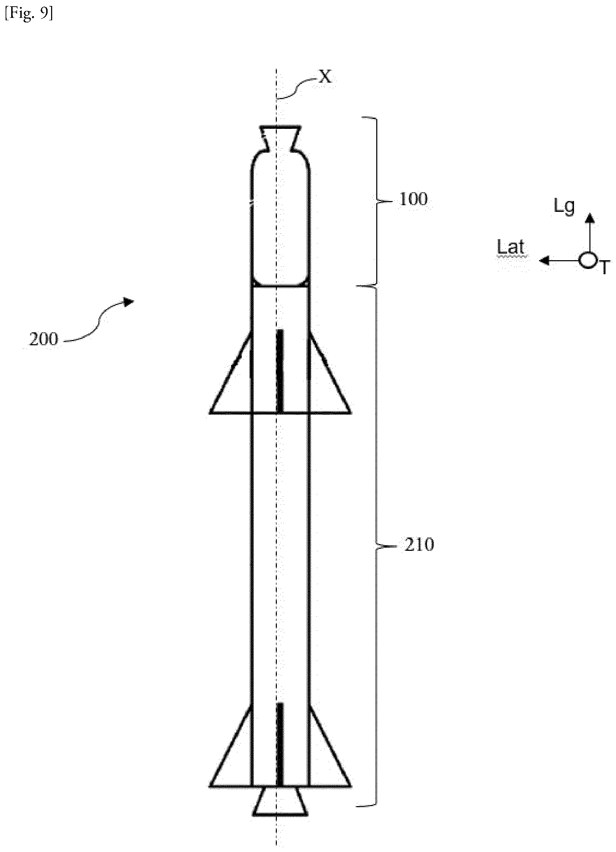

La figure 9 illustre enfin un dispositif de déviation 200 de débris spatiaux équipé d'au moins un système d'éjection 100 de particules selon l'un quelconque des modes de réalisation détaillé ci-dessus. Tel que représenté, un tel dispositif de déviation 200 s'étend principalement selon un axe X d'extension longitudinal, c'est-à-dire un axe parallèle à l'axe longitudinal Lg du trièdre illustré. Ce dispositif de déviation 200 comprend au moins une fusée suborbitale 210 porteuse du système d'éjection 100 selon la présente invention. Lorsqu'un débris spatial doit être dévié, le dispositif de déviation 200 selon l'invention est lancé dans l'espace, grâce à la fusée suborbitale 210. On entend par « fusée suborbitale », un appareil capable de quitter l'atmosphère terrestre mais sans entrer en orbite. Lorsque cette fusée suborbitale 210 atteint une position prédéterminée, le système d'éjection 100 de particules est mis en fonctionnement de sorte à ce que des particules soient éjectées dans l'environnement externe 160, en l'espèce dans l'espace. Plus particulièrement, une quantité de particules suffisante pour dévier la trajectoire du débris à dévier est éjectée par le système d'éjection 100. Par exemple, pour un débris d'une tonne, entre 10 kg et 20 kg de particules sont éjectées sur une durée comprise entre 2 secondes et 10 secondes. Lorsque le débris à dévier rencontre les particules ainsi éjectées, il subit une force qui modifie sa trajectoire, évitant ainsi la collision prévue.

On comprend à la lecture de ce qui précède que la présente invention propose un système d'éjection de particules qui permet d'une part de maîtriser le débit d'éjection de ces particules ainsi que leur trajectoire, c'est-à-dire le lieu d'éjection de ces particules. La présente invention permet ainsi d'éjecter des particules sur une trajectoire d'un objet en orbite afin de dévier la trajectoire de cet objet et éviter une potentielle collision, ou une entrée en atmosphère de cet objet.

## Revendications

1. Système d'éjection (100) de particules (P) dans l'espace, destiné à éjecter des particules (P) sur une trajectoire d'un objet en orbite afin de dévier la trajectoire de cet objet, le système d'éjection (100) comprenant au moins un module d'éjection (130) des particules (P), où ces particules (P) ont une taille comprise entre 5 µm et 200 µm, le système comporte au moins un conduit de stockage (110) des particules (P) qui débouche au niveau d'au moins un orifice d'injection (120) des particules (P), le module d'éjection (130) des particules (P) étant en communication avec un environnement externe (160) au système d'éjection (100) des particules (P), le système d'éjection (100) comprenant au moins un premier moyen d'entrainement (170) des particules (P) configuré pour entraîner les particules (P) à fleur de l'au moins un orifice d'injection (120) et au moins un deuxième moyen d'entrainement (140) configuré pour entraîner les particules (P) en dehors de l'au moins un conduit de stockage (110), le premier moyen d'entrainement (170) et le deuxième moyen d'entrainement (140) étant distincts.

2. Système d'éjection (100) de particules (P) selon la revendication précédente, dans lequel le premier moyen d'entrainement (170) comprend au moins un corps de vérin (116) et un piston (113) apte à translater dans le corps de vérin (116), le corps de vérin (116) et le piston (113) délimitant, au moins partiellement, l'au moins un conduit de stockage (110) des particules (P).

3. Système d'éjection (100) de particules (P) selon l'une quelconque des revendications précédentes, dans lequel le deuxième moyen d'entrainement (140) comprend au moins un dispositif de génération (141, 144) d'un flux de gaz (G).

4. Système d'éjection (100) de particules (P) selon la revendication précédente, dans lequel le dispositif de génération (141, 144) du flux de gaz (G) comprend au moins un dispositif de stockage (141) d'un fluide et au moins un moyen de transformation (144) de ce fluide en flux de gaz (G).

5. Système d'éjection (100) de particules (P) selon l'une quelconque des revendications précédentes, dans lequel le module d'éjection (130) des particules (P) comprend au moins une chambre (131) et au moins un divergent (132) agencés successivement le long d'une droite d'extension (D) principale du module d'éjection (130).

6. Système d'éjection (100) selon la revendication précédente, dans lequel au moins un corps central (135) est agencé dans le divergent (132).

7. Système d'éjection (100) selon l'une quelconque des revendications 5 ou 6, dans lequel l'au moins un orifice d'injection (120) des particules (P) débouche dans la chambre (131) du module d'éjection (130).

8. Système d'éjection (100) selon l'une quelconque des revendications 5 ou 6, dans lequel l'au moins un orifice d'injection (120) des particules (P) débouche dans le divergent (132) du module d'éjection (130).

9. Système d'éjection (100) selon la revendication précédente, dans lequel l'au moins un orifice d'éjection (120) est ménagé dans une paroi (134) qui délimite, au moins partiellement, le divergent (132).

10. Système d'éjection (100) de particules (P) selon la revendication 6, dans lequel, l'au moins un orifice d'injection (120) étant ménagé dans une paroi (136) délimitant, au moins partiellement, le corps central (135) et dans lequel l'orifice d'injection (120) débouche dans l'environnement externe (160).

11. Système d'éjection (100) de particules (P) selon l'une des revendications 3 ou 4 prise en combinaison avec l'une quelconque des revendications 5 à 10, dans lequel une section de passage du flux de gaz (G) augmente depuis une extrémité du divergent (132) en communication avec la chambre (131), en direction de l'environnement externe (160).

12. Système d'éjection (100) de particules (P) selon l'une quelconque des revendications précédentes, dans lequel les particules (P) sont des particules (P) métalliques.

13. Dispositif de déviation (200) de débris spatiaux comprenant au moins une fusée suborbitale (210) et au moins un système d'éjection (100) de particules (P) selon l'une quelconque des revendications précédentes.

## Patentansprüche

1. Auswurfsystem (100) für Partikel (P) in den Weltraum, dazu bestimmt, Partikel (P) auf einer Flugbahn eines im Orbit befindlichen Objekts auszustoßen, um die Flugbahn dieses Objekts abzulenken, wobei das Auswurfsystem (100) mindestens ein Auswurfmodul umfasst (130) der Partikel (P), wobei diese Partikel (P) eine Größe zwischen 5 µm und 200 µm aufweisen, das System mindestens einen Speicherkanal (110) der Partikel (P) umfasst, der mindestens eine Einspritzöffnung öffnet (120) der Partikel (P), wobei das Ausstoßmodul (130) der Partikel (P) mit einer Umgebung außerhalb (160) des Ausstoßsystems (100) der Partikel (P) in Verbindung steht, wobei das Ausstoßsystem (100), umfassend mindestens ein erstes Mittel (170) zum Antreiben der Partikel (P), das so konfiguriert ist, dass es die Partikel (P) bündig mit der mindestens einen Einspritzöffnung (120) antreibt, und mindestens ein zweites Antriebsmittel (140), das so konfiguriert ist um die Partikel (P) außerhalb der mindestens einen Speicherleitung (110) anzutreiben, wobei das erste Antriebsmittel (170) und das zweite Antriebsmittel (140) unterschiedlich sind.

2. Auswurfsystem (100) für Partikel (P) nach dem vorhergehenden Anspruch, bei dem das erste Antriebsmittel (170) mindestens einen Zylinderkörper (116) und einen Kolben (113) umfasst, der sich im Zylinderkörper (116) verschieben kann, wobei der Zylinderkörper (116) und der Kolben (113) zumindest teilweise den mindestens einen Speicherkanal (110) der Partikel (P) begrenzen.

3. Auswurfsystem (100) für Partikel (P) nach einem der vorhergehenden Ansprüche, bei dem das zweite Antriebsmittel (140) mindestens eine Vorrichtung zur Erzeugung (141, 144) eines Gasstroms (G) umfasst.

4. Auswurfsystem (100) für Partikel (P) nach dem vorhergehenden Anspruch, bei dem die Vorrichtung zur Erzeugung (141, 144) des Gasstroms (G) mindestens eine Speichervorrichtung (141) eines Fluids und mindestens ein Mittel umfasst zur Umwandlung (144) dieser Flüssigkeit in einen Gasstrom (G).

5. Auswurfsystem (100) für Partikel (P) nach einem der vorhergehenden Ansprüche, bei dem das Ausstoßmodul (130) der Partikel (P) mindestens eine Kammer (131) und mindestens eine angeordnete Divergenz (132) umfasst nacheinander entlang einer Haupterstreckungslinie (D) des Auswurfmoduls (130).

6. Auswurfsystem (100) nach dem vorhergehenden Anspruch, bei dem in der Divergenz (132) mindestens ein Zentralkörper (135) angeordnet ist.

7. Auswurfsystem (100) nach einem der Ansprüche 5 oder 6, bei dem die mindestens eine Einspritzöffnung (120) der Partikel (P) in die Kammer (131) des Ausstoßmoduls (130) mündet.

8. Auswurfsystem (100) nach einem der Ansprüche 5 oder 6, bei dem die mindestens eine Einspritzöffnung (120) der Partikel (P) in die Divergenz (132) des Ausstoßmoduls (130) mündet.

9. Auswurfsystem (100) nach dem vorhergehenden Anspruch, bei dem die mindestens eine Auswurföffnung (120) in einer Wand (134) vorgesehen ist, die Divergenz (132) zumindest teilweise begrenzt.

10. Auswurfsystem (100) von Partikeln (P) nach Anspruch 6, bei dem die mindestens eine Einspritzöffnung (120) in einer Wand (136) vorgesehen ist, die den Zentralkörper (135) zumindest teilweise begrenzt die Einspritzöffnung (120) öffnet sich in die äußere Umgebung (160).

11. Auswurfsystem (100) von Partikeln (P) nach einem der Ansprüche 3 oder 4 in Kombination mit einem der Ansprüche 5 bis 10, bei dem ein Durchgangsabschnitt des Gasstroms (G) von einem Ende der Divergenz (132) in Verbindung mit der Kammer (131) zur Außenumgebung (160).

12. Auswurfsystem (100) von Partikeln (P) nach einem der vorhergehenden Ansprüche, wobei die Partikel (P) metallische Partikel (P) sind.

13. Vorrichtung (200) zur Ablenkung von Weltraumschrott, umfassend mindestens eine suborbitale Rakete (210) und mindestens ein Auswurfsystem (100) von Partikeln (P) nach einem der vorhergehenden Ansprüche.

## Claims

1. Ejection system (100) for particles (P) into space, intended to eject particles (P) on a trajectory of an object in orbit in order to deviate the trajectory of this object, the ejection system (100) comprising at least one ejection module (130) of the particles (P), where these particles (P) have a size between 5 µm and 200 µm, the system comprises at least one storage conduit (110) of the particles (P) which opens at least one injection orifice (120) of the particles (P), the ejection module (130) of the particles (P) being in communication with an environment external (160) to the ejection system (100) of the particles (P), the ejection system (100) comprising at least one first means (170) for driving the particles (P) configured to drive the particles (P) flush with the at least one of the injection orifice (120) and at least one second drive means (140) configured to drive the particles (P) outside the at least one storage conduit (110), the first drive means (170) and the second drive means (140) being distinct.

2. Ejection system (100) for particles (P) according to the preceding claim, in which the first drive means (170) comprises at least one cylinder body (116) and a piston (113) able to translate in the cylinder body (116), the cylinder body (116) and the piston (113) delimiting, at least partially, the at least one storage conduit (110) of the particles (P).

3. Ejection system (100) for particles (P) according to any one of the preceding claims, in which the second drive means (140) comprises at least one device for generating (141, 144) a gas flow (G).

4. Ejection system (100) for particles (P) according to the preceding claim, in which the device for generating (141, 144) the gas flow (G) comprises at least one storage device (141) of a fluid and at least one means for transforming (144) this fluid into a gas flow (G).

5. Ejection system (100) for particles (P) according to any one of the preceding claims, in which the ejection module (130) of the particle (P) comprises at least one chamber (131) and at least one divergent (132) arranged successively along a main extension line (D) of the ejection module (130).

6. Ejection system (100) according to the preceding claim, in which at least one central body (135) is arranged in the divergent (132).

7. Ejection system (100) according to any one of claims 5 or 6, in which the at least one injection orifice (120) of the particles (P) opens into the chamber (131) of the ejection module (130).

8. Ejection system (100) according to any one of claims 5 or 6, in which the at least one injection orifice (120) of the particles (P) opens into the divergent (132) of the ejection module (130).

9. Ejection system (100) according to the preceding claim, in which the at least one ejection orifice (120) is provided in a wall (134) which delimits, at least partially, the divergent (132).

10. Ejection system (100) of particles (P) according to claim 6, in which, the at least one injection orifice (120) being provided in a wall (136) delimiting, at least partially, the central body (135) and in which the injection orifice (120) opens into the external environment (160).

11. Ejection system (100) of particles (P) according to one of claims 3 or 4 taken in combination with any one of claims 5 to 10, in which a passage section of the gas flow (G) increases from one end of the divergent (132) in communication with the chamber (131), towards the external environment (160).

12. Ejection system (100) of particles (P) according to any one of the preceding claims, wherein the particles (P) are metallic particles (P).

13. Space debris deflection device (200) comprising at least one suborbital rocket (210) and at least one ejection system (100) of particle (P) according to any one of the preceding claims.
